# EUROPÄISCHE PATENTSCHRIFT

(11) **EP 0 916 043 B1**
(45) Veröffentlichungstag und Bekanntmachung des Hinweises auf die Patenterteilung: **06.12.2000**
(21) Anmeldenummer: 97918943.8
(22) Anmeldetag: 25.07.1997
(51) Int. Cl.: F16H 61/14, F16H 61/00

(54) **STEUERSYSTEM FÜR EIN STUFENLOS VERSTELLBARES GETRIEBE MIT EINEM DREHMOMENTWANDLER MIT EINER WANDLERKUPPLUNG**
CONTROL SYSTEM FOR AN INFINITELY VARIABLE CHANGE-SPEED GEAR WITH A TORQUE CONVERTER WITH A LOCK-UP CLUTCH
SYSTEME DE COMMANDE POUR TRANSMISSION A VARIATION CONTINUE COMPORTANT UN CONVERTISSEUR DE COUPLE A EMBRAYAGE DE PONTAGE

(30) Priorität: 01.08.1996 DE 19631071
(43) Veröffentlichungstag der Anmeldung: 19.05.1999
(73) Patentinhaber: ZF-Batavia, L.L.C., Plymouth, Michigan 48170-2456 (US)
(72) Erfinder: VORNDRAN, Ralf, D-88131 Bodolz (DE)
(74) Vertreter: Zietlow, Karl-Peter
(86) Internationale Anmeldenummer: EP9704047
(87) Internationale Veröffentlichungsnummer: WO9805887

(56) Entgegenhaltungen:
- EP-A- 0 297 727
- EP-A- 0 697 548
- DE-A- 4 104 542
- DE-A- 4 111 083
- US-A- 4 393 467

## Beschreibung

Die Erfindung bezieht sich auf ein Steuersystem zum Steuern einer Wandlerkupplung in einem stufenlos verstellbaren Getriebe mit den Merkmalen nach dem Oberbegriff des Hauptanspruchs.

Hydrodynamische Drehmomentwandler in automatischen Getrieben erfüllen vornehmlich die Aufgabe, einen komfortablen Anfahrvorgang mit einem erhöhten Anfahrmoment zu ermöglichen und die Motor-Drehschwingungen vom Triebstrang abzukoppeln. Mit den ständig steigenden Anforderungen an die Reduzierung des Kraftstoffverbrauchs und die Abgasemission wird es erforderlich, auch die Verluste im hydrodynamischen Drehmomentwandler stärker zu senken. Zum einen gelingt dies durch die Optimierung des Wandlers selbst und durch den Einsatz einer (schlupfgeregelten) Wandlerkupplung. Ihr Ziel ist es, den Fahranteil der komfortablen, jedoch verlustbehafteten hydrodynamischen Kraftübertragung zu reduzieren und somit Kraftstoff zu sparen, ohne auf eine ausreichende Schwingungsabkoppelung zu verzichten.

Die Steuerung der Wandlerkupplung besteht im wesentlichen in der Strategie und der Druckmodulation. In der Strategie wird festgelegt, welchen Zustand die Wandlerüberbrükkungskupplung, unter Berücksichtigung eines optimalen Verbrauchs- und Komfortverhaltens, einnimmt. Definiert werden zumindest zwei Grundzustände (offen und geschlossen). Daneben ist ein schlupfender Betrieb der Wandlerüberbrückungskupplung realisierbar.

Aus der DE-A 41 04 542 ist ein Steuersystem zur Steuerung einer Überbrückungskupplung in einem stufenlosen Getriebe bekanntgeworden. Zur Steuerung wird das Verhältnis der Drehzahlen des Antriebsmotors und der Primärscheibe des stufenlosen Getriebes gebildet. Liegt dieser Wert bei eins, wird die Wandlerüberbrückungskupplung geschlossen. Durch einen Vergleich einer Ist-Übersetzung zwischen der Primär- und Sekundärscheibe des stufenlosen Getriebes mit einer errechneten Soll-Übersetzung wird bestimmt, daß der Drehmomentwandler aktiviert werden soll. In diesem Fall wird ein Ausrücksignal generiert, um die Wandlerüberbrückungskupplung auszurücken. Beim Ein- und Ausrücken werden Zeitstufen wirksam um sicherzustellen, daß der Sekundärdruck an die zu übertragenden Momente - in Abhängigkeit von den Betriebszuständen der Wandlerüberbrückungskupplung - angepaßt wird. Diese Strategie berücksichtigt die Grundfunktionen zum Steuern einer Wandlerüberbrückungskupplung.

Die DE-A 41 11 083 die als nüchtliegender Stand der Tecknik angesehen werden kann, offenbart ein Steuerungsverfahren zum Schließen einer Wandlerüberbrückungskupplung, bei dem ein größerer Motordrehzahlanstieg beim Schließen der Wandlerkupplung unmittelbar im Anfahrvorgang des Fahrzeugs, wenn der Motor beim Gasgeben in den Wandlerbereich einläuft, vermieden wird. Hierzu wird bei Überschreitung einer Fahrgeschwindigkeitsschwelle der aktuellen Drosselklappenstellung des Motors eine definierte Motor-Solldrehzahl zugeordnet. Alsdann wird die Wandlerkupplung mittels einer Differenzdrehzahlregelung geschlossen, bei der die Führungsgröße aus der Differenz vom Motor-Solldrehzahl und tatsächlicher Motordrehzahl bebildet wird, wobei diese Differenz während des Schließvorgangs möglichst nahe Null liegt.

Der Erfindung liegt die Aufgabe zugrunde, eine Strategie zum Steuern einer Wandlerkupplung zu schaffen, die Bestandteil einer Betriebsstrategie für ein stufenlos verstellbares Getriebe ist.

Diese Aufgabe wird mit einem, auch die kennzeichnenden Merkmale des Hauptanspruchs aufweisenden, gattungsgemäßen Steuersystem zum Steuern einer Wandlerkupplung gelöst.

Weitere vorteilhafte Ausgestaltungen des erfindungsgemäßen Steuersystems sind den Ansprüchen 2 bis 10 zu entnehmen.

Weitere, für die Erfindung wesentliche Merkmale sowie die daraus resultierenden Vorteile sind der nachfolgenden Beschreibung eines Ausführungsbeispiels anhand der Zeichnungen zu entnehmen.
Es zeigen:
- Fig. 1: ein Schema eines stufenlosen Getriebes innerhalb eines Kraftfahrzeugs;
- Fig. 2: eine grafische Darstellung zur Erläuterung der Zu- bzw. Abschaltbedingungen und
- Fig. 3: ein Variogramm des stufenlosen Getriebes.

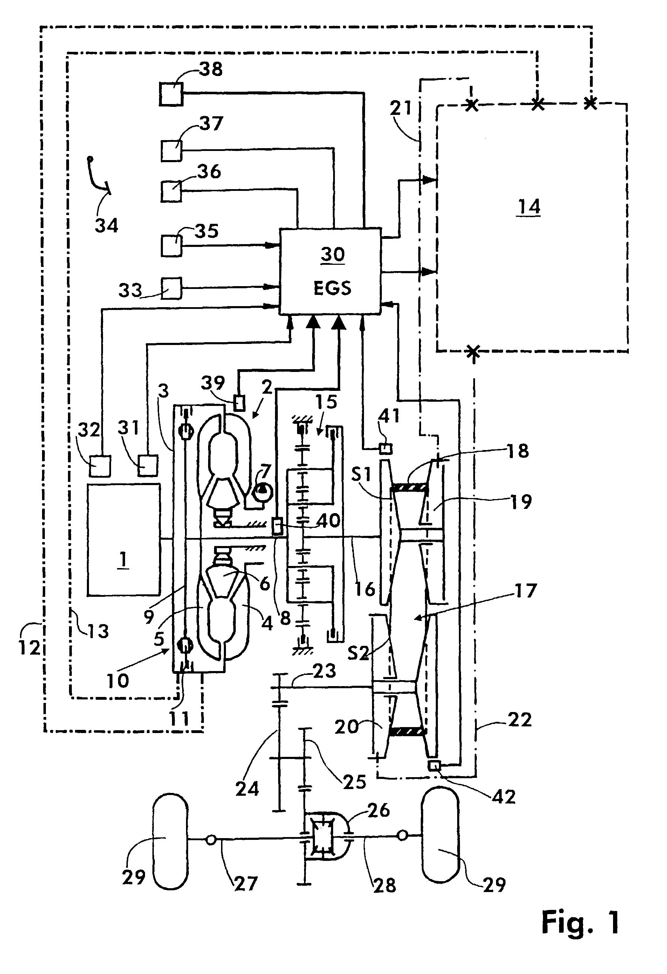

Fig. 1 zeigt schematisch ein stufenloses Getriebe: Eine Antriebseinheit 1, vorzugsweise eine Brennkraftmaschine, treibt eine Anfahreinheit, bevorzugt einen hydrodynamischen Drehmomentwandler 2, an. Der hydrodynamische Drehmomentwandler ist in bekannter Weise aufgebaut: Ein Wandlergehäuse 3 ist drehfest mit einem Pumpenrad 4 verbunden. Dem Pumpenrad 4 ist ein Turbinenrad 5 zugeordnet. Die Anordnung wird durch ein Leitrad 6 vervollständigt. Gleichzeitig mit dem Pumpenrad wird eine Ölpumpe 7 zur Versorgung des Systems mit Drucköl angetrieben.

Das Turbinenrad 5 ist mit einer Ausgangswelle 8 des hydrodynamischen Wandlers drehfest verbunden. Mit dem Turbinenrad ist ferner ein Kolben 9 einer Wandlerkupplung 10 drehfest, jedoch axial verschiebbar - was in der Zeichnung selbst nicht dargestellt ist - verbunden. Am Umfang des Kolbens 9 ist ein Reibbelag 11 angebracht.

Zum Schließen der Wandlerkupplung 10 wird der - bezogen auf die Zeichnung - rechts vom Kolben 9 liegende Ölraum mit Drucköl aus einer Hydraulikleitung 12 beaufschlagt. Der Kolben 9 bewegt sich nach links und der Reibbelag kommt am Wandlergehäuse 3 zur Anlage. In diesem Fall besteht ein direkter Durchtrieb von der Antriebseinheit 1 zur Ausgangswelle 8.

Soll die reibschlüssige Verbindung gelöst werden, kann dies entweder dadurch geschehen, daß der im rechts liegenden Druckraum herrschende Öldruck abgesenkt wird oder - unter gegenseitiger Beeinflussung - über eine weitere Hydraulikleitung 13 ein Druck in dem links vom Kolben 9 - bezogen auf die Zeichnung - liegenden Druckraum aufgebaut wird, der den Kolben 9 im Öffnungssinne nach rechts verschiebt. Die Wandlerkupplung 10 ist dann geöffnet, so daß eine Differenzdrehzahl (Schlupf) zwischen dem Pumpenrad 4 und dem Turbinenrad 5 herrschen kann.

Die Hydraulikleitungen 12 und 13 sind an eine Hydrauliksteuerung 14 angeschlossen.

Dem hydrodynamischen Drehmomentwandler 2 ist ein Wendesatz in Form eines Planetengetriebes 15 nachgeschaltet. Mit diesem können die Fahrtrichtungen Vorwärts oder Rückwärts über geeignete Schaltelemente (Kupplung bzw. Bremse) geschaltet werden.

Eine Ausgangswelle 16 treibt ein stufenlos verstellbares Getriebe 17 (Variator) an. Dieses stufenlose Getriebe besteht im wesentlichen aus einer Primärscheibe S1 und einer Sekundärscheibe S2, die aus paarweise angeordneten Kegelscheiben gebildet werden und zwischen sich ein Umschlingungsorgan 18 aufnehmen. Ein Primärzylinder 19 und ein Sekundärzylinder 20 sind über Hydraulikleitungen 21 und 22 an die Hydrauliksteuerung 14 angeschlossen.

Eine Abtriebswelle 23 treibt über Übersetzungsstufen 24 und 25 und ein Differential 26 die Achshalbwellen 27 und 28 der angetriebenen Räder 29 eines selbst nicht dargestellten Fahrzeugs an.

Das stufenlose Getriebe 17 wird durch eine elektronische Getriebesteuerung 30 (EGS) gesteuert. Aufgabe der Getriebesteuerung ist es, die Übersetzung nach einer vorgegebenen Betriebsstrategie zu verstellen. Hierzu ist die Verarbeitung einer Vielzahl von Betriebsparametern erforderlich. Beispielsweise erfaßt ein Sensor 31 die Eingangsvariable: aktuelle Drosselklappenstellung α_DK. Mit einem Sensor 32 wird die Ist-Motordrehzahl n_Mot erfaßt. Ein Sensor 33 erfaßt die Stellung eines Steuerorgans 34, mit dem der Fahrer des Fahrzeugs einen Leistungsbedarf (Fahrpedalwunsch, FPW) anmeldet. Ein Sensor 35 meldet einen manuellen Fahrereingriff.

Die Aufzählung der möglichen Betriebsparameter (Eingangsvariablen) ist unvollständig. Beispielsweise zählt zu diesen Größen die Temperatur der Hydraulikflüssigkeit. Diese wird mit Hilfe eines Sensors 36 erfaßt. Für bestimmte Fahrsituationen müssen weitere Parameter verarbeitet werden. Um Kurvenfahrt zu erkennen, ist es sinnvoll, die Querbeschleunigung und/oder Raddrehzahldifferenzen zu verwerten. Dies geschieht mit einem weiteren Sensor 37. Ein Sensor 38 erfaßt Steigungen bzw. Gefälle.

Über Sensoren 39 und 40 werden die Drehzahlen des Pumpenrades 2, des Turbinenrades 5 bzw. der Ausgangswelle 8 an die elektronische Getriebesteuerung 30 übermittelt.

Mit Hilfe eines weiteren Sensors 41 wird die Drehzahl n_S1 der Primärscheibe überwacht. Ein weiterer Sensor 42 liefert die Drehzahl n_S2 der Sekundärscheibe. Die Eingangsvariablen werden durch die elektronische Getriebesteuerung zu Ausgangsvariablen mit unterschiedlichen Zweckbestimmungen (Informationen zur Anzeige von Systemzuständen, Steuersignale für Stellglieder usw.) verarbeitet. Einige der Ausgangsvariablen liegen als Eingangsvariable an der Hydrauliksteuerung 14 an, um die Betätigung von Elektromagnetventilen, so z. B. für die Verstellung der Primärund Sekundärscheibe oder auch zur Steuerung der Wandlerkupplung, auszulösen.

Ausgangspunkt für die Strategie zur Steuerung der Wandlerkupplung ist die Überlegung, den hydrodynamischen Drehmomentwandler als hydrodynamischen Variator in Reihenschaltung mit dem stufenlos verstellbaren Getriebe zu betrachten. Im Rahmen einer Fahrstrategie wird ein Betriebspunkt vorgegeben. Ein bevorzugtes Verfahren zur Vorgabe eines Betriebspunktes in einem dynamischen Fahrbereich ist in der deutschen Patentanmeldung 196 00 915.4 vom 12.01.96 der Anmelderin erläutert. Insoweit wird auf die dort gemachten Ausführungen ergänzend verwiesen. Im Rahmen dieser Betriebsstrategie wird ein Übersetzungsverhältis iv soll bzw. eine Drehzahl der Primärscheibe n_S1_soll vorgegeben. Dieser Vorgabe entspricht eine Vorgabe der Motordrehzahl n_Mot_soll. Wenn die Wandlerkupplung geöffnet ist, richtet sich der Motorbetriebspunkt n_Mot (Regelgröße) nach dieser Fahrstrategie. Ergänzend sei bemerkt, daß der Fahrbereich einerseits durch die Fahrleistungskennlinie FL_Kennlinie bis zur Kennlinie der kleinsten Übersetzung iv_min-Kennlinie definiert ist.

Mit dieser generellen Vorgabe wird ein Betrieb der Wandlerkupplung mit folgenden Vorteilen möglich:

Die Wandlerkupplung wird im Bereich des Anfahrens, wenn der Motor beim Gasgeben in den Wandlerbereich einläuft, geschlossen, womit ein Überdrehen des Motors über den von der Fahrstrategie vorgegebenen Wert n_S1_soll der Primärscheiben-Drehzahl (Overshoot) und dem damit sich beim Schließvorgang ergebenden negativen Motor-Drehzahl-Gradienten vermieden wird.

Die Führung der Sollwert-Motordrehzahl n_Mot_soll erfolgt im gesamten Fahrbereich über die Vorgabe einer Motordrehzahl n_Mot. Das Regelverhalten des Reglers für die Wandlerkupplung kann so optimiert werden. Das Verhalten der Wandlerkupplung, insbesondere ihr Übergang in den geschlossenen Zustand (Schließqualität), ist somit eine Funktion der Führung der Motor-Soll-Drehzahl n_Mot_soll.

Wenn die Wandlerkupplung geöffnet ist, wird ein Abfallen des Motors im Schub in den Wandlerbereich (Undershoot) vermieden. Dieser Abfall wird vom Fahrer deswegen als störend empfunden, weil die Betriebspunktvorgabe n_S1_soll bzw. iv_soll durch das plötzliche Abfallen des Motors verlassen wird und der Motor wesentlich durch die Schubcharakteristik des Wandlers beeinflußt wird.

Weil die Motordrehzahl n_Mot direkt an die Vorgabe eines Betriebspunktes gekoppelt ist, wird beim Anhalten eine Fördermenge der Ölpumpe - entsprechend der n_S1_soll-Drehzahl - erzeugt. Damit wird das Rückschalten in Richtung LOW deutlich unterstützt, womit einem wesentlichen Problem im Zusammenhang mit einem stufenlos verstellbaren Getriebe wirksam begegnet wird. Ferner wird ein zu früher, unkontrollierter Abfall auf Leerlaufdrehzahl vermieden.

Bei der technischen Realisierung sind grundsätzlich zwei Fälle zu unterscheiden:
Fall 1:
   Das Fahrzeug fährt in der Ebene oder bergauf bzw.
Fall 2:
   das Fahrzeug fährt bergab.

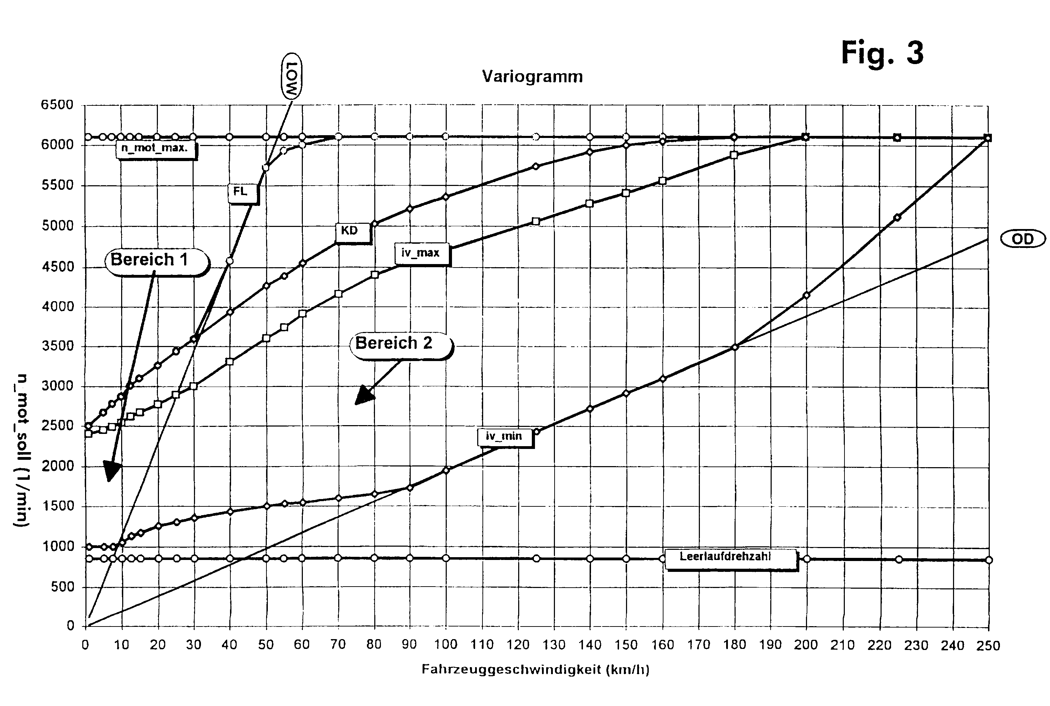

Ergänzend muß der Bereich 1 außerhalb des Variogrammes (Fig. 3), eingegrenzt durch die iv_max-, iv_min- und LOW-Kennlinie und der Bereich, der durch den LOW- und OD-Fahrstrahl (Overdrive) eingegrenzt wird (hier mit Bereich 2 bezeichnet), unterschiedlich behandelt werden.

Abhängig von den genannten Fällen und Bereichen 1 und 2 wird die Vorgabe des Betriebspunktes auf unterschiedliche Arten realisiert. Hierbei gelten folgende grundsätzliche Definitionen:
Regelgröße:
   n_Mot
Führungsgröße:
   - Bereich 1:: n_Mot_soll
   - Bereich 2:: n_Mot_soll, entsprechend der Soll-Drehzahl der Primärscheibe n_S1_soll. Der Wert n_S1_soll wird hierbei aus dem Produkt der Soll-Übersetzung iv_soll und der Drehzahl der Sekundärscheibe n_S2 generiert.
Stellgröße
   für die Bedingung Wandlerkupplung - schließen: i_drwk = p_wk (Stellgröße Wandlerkupplungsdruck entsprechend p_wk und
   für die Bedingung Wandlerkupplung - öffnen:
   i_driv entsprechend dem Druck im Primärzylinder P_S1.
Schließen der Wandlerkupplung:

Die Vorgabe einer Motor-Soll-Drehzahl n_mot_soll wird bei einer Drosselklappenstellung > 1,5 % (nicht Null) in den Bereichen 1 und 2 wie folgt generiert:

### Bereich 1:

Die applizierten iv_min- und iv_max-Kennlinien werden über die Drehzahl der Sekundärscheibe n_S2 auf Minimal-Motordrehzahlen n_Mot_min bzw. Maximal-Motordrehzahlen n_Mot_max umgerechnet und als Kennlinien in der elektronischen Getriebesteuerung abgelegt. Die links vom LOW-Fahrstrahl n_S2 errechneten Übersetzungen nehmen damit Werte an, die größer der mechanischen LOW-Übersetzung sind. Im aktuellen Fahrbereich wird, beispielsweise über ein Fuzzy-Regelwerk, ein Motor-Soll-Drehzahlwert n_Mot_soll generiert, der zur Führung der Motordrehzahl n_Mot dient. Die Vorgabe der Motor-Soll-Drehzahl n_Mot_soll muß aus dem Stillstand des Fahrzeuges heraus erfolgen.
Die Vorgabe des Betriebspunktes n_Mot_soll darf beim Übergang vom Bereich 1 auf den Bereich 2 keine Unstetigkeit aufweisen und wird vorzugsweise miteinander verknüpft.

### Bereich 2:

Die Vorgabe der Übersetzung iv_soll im Rahmen der Betriebsstrategie wird über die Drehzahl der Primärscheibe n_S2 direkt in eine Soll-Motordrehzahl n_Mot_soll umgerechnet und als Führungsgröße verwendet. n_Mot_soll folgt aus dem Stillstand der LOW-Kennlinie heraus bis zum Schnittpunkt mit der iv_min = n_Mot_min-Kennlinie.

Bei einer Stellung der Drosselklappe < 1,5 % (Null) gelten bei Fahrten in der Ebene oder bergauf die vorstehend für die Bereiche 1 und 2 geschilderten Vorgehensweisen.

Für Fahrten bergab wird die Soll-Motordrehzahl nach dem Verfahren, wie vorstehend zu Bereich 2 erläutert, vorgegeben. Die Wandlerkupplung wird im Synchronpunkt geschlossen. Unter Synchronpunkt wird der Punkt verstanden, bei dem der Wert der Soll-Motordrehzahl n_Mot_soll, gebildet aus dem Produkt der aktuellen Übersetzung und der Drehzahl der Sekundärscheibe n_S2, größer oder gleich der Leerlaufdrehzahl des Motors ist. Damit ist sichergestellt, daß der Motor so früh wie möglich starr an die Verstellung des stufenlosen Getriebes gekoppelt wird, um eine möglichst gute Motorbremswirkung zu erzielen.

Für das Öffnen der Wandlerkupplung gilt nachstehendes Verfahren:

Beim Öffnen der Wandlerkupplung wird eine Überschneidungsschaltung zwischen dem Drehmomentwandler und dem stufenlosen Getriebe durchgeführt. Mit dem Signal zum Öffnen der Wandlerkupplung wird die Übersetzung des stufenlosen Getriebes als Stellgröße benutzt, um den Motor weiter auf dem aktuellen Betriebspunkt zu halten, der bislang zum Führen der Übersetzung des stufenlosen Getriebes herangezogen wurde. Es gilt: Die Vorgabe der Übersetzung iv_soll bzw. der Drehzahl der Primärscheibe n_S1_soll wird zur Soll-Vorgabe für die Motordrehzahl n_Mot_soll. Ziel ist es, die Störgröße Drehmomentwandler in idealer Weise durch das stufenlose Getriebe auszuregeln. Hierbei kann das Öffnen der Wandlerkupplung besonders angepaßt erfolgen, um den Regler zu unterstützen. Hinsichtlich des Verfahrens des Öffnens der Wandlerkupplung wird keine Unterscheidung hinsichtlich einer Abhängigkeit vom Fahrwiderstand gemacht.

Die in der elektronischen Getriebesteuerung implementierten Grundfunktionen haben hinsichtlich der Anforderungen an den Betriebszustand der Wandlerkupplung oberste Priorität, unabhängig von der verwendeten Betriebsstrategie.

Die Hauptbedingungen werden entsprechend den Zu- und Abschaltkriterien, definiert durch die Grundfunktionen, unabhängig von der zur Anwendung gelangenden Betriebsstrategie ausschließlich durch die elektronische Getriebesteuerung definiert. Diese Zu- und Abschaltkriterien müssen, damit die Wandlerkupplung durch eine Strategie beeinflußt werden kann, zwingend erfüllt sein. Die Information, ob eir Zu- oder Abschalten der Wandlerkupplung gewünscht ist, wirc den Grundfunktionen der elektronischen Getriebesteuerung über ein entsprechendes Zustandsflag Z_WK mitgeteilt.

### Zuschaltkriterien:

Die Wandlerkupplung wird zugeschaltet (Z_WK = Zuschalten), wenn:
n_Mot_soll > 1 200 1/min UND
v_fzg > 3 km/h ODER
n_S2 > 150 1/min UND
C_getr > 5 °C UND
Bremse = 0 (d. h., die Bremse ist nicht betätigt) UND
Drehrichtung Sekundärscheibe n_S2 = positiv;
wobei v_fzg die Fahrzeuggeschwindigkeit und C_getr die Getriebetemperatur bedeuten.

### Abschaltkriterien:

Für das Abschalten öffnen der Wandlerkupplung (Z_WK = Abschalten) gilt:
Z_WK = Abschalten, wenn n_Mot < 1 200 1/min ODER
Z_blr = 1 (blockierende Räder erkannt oder ABS aktiv) ist.

Der Schließzeitpunkt zum Schließen der Wandlerkupplung wird unter Berücksichtigung besonderer Fahrzustände festgelegt. Bei der Bestimmung des Schließzeitpunktes sollen Fahrzustände vermieden werden, bei denen eine geschlossene Wandlerkupplung:
- nicht notwendig erscheint (z. B. bei kleinen Lasten oder niedriger Fahrzeuggeschwindigkeit, wie Rangieren) oder
- aus Komfortgründen nicht sinnvoll ist (z. B. kleine Fahrgeschwindigkeit und hohe Übersetzung oder Stadtbetrieb im niedrigen Geschwindigkeitsbereich, bei dem sehr häufige Schub- und Zugwechsel zu erwarten sind).

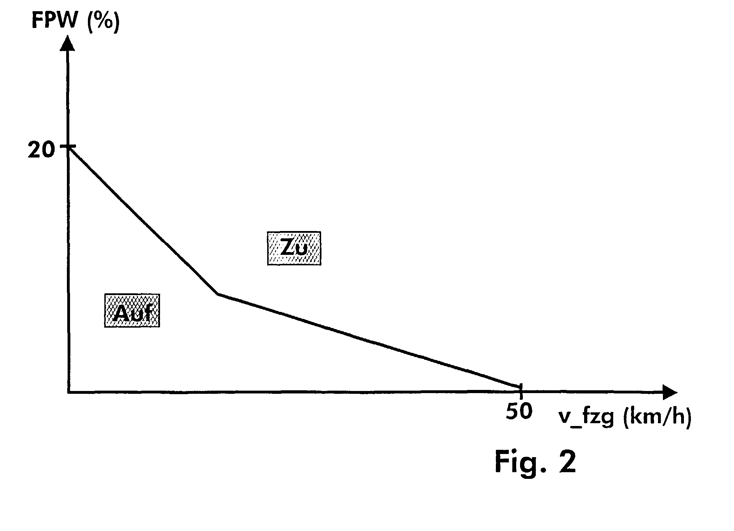

Für die Bestimmung des Zeitpunktes kann im einfachsten Fall ein einfacher Algorithmus dienen. Das Zustandsflag Z_WK wird als Funktion des Fahrpedalwunsches (FPW) und der Fahrzeuggeschwindigkeit (v_fzg) auf Zuschalten gesetzt, wenn der Betriebspunkt oberhalb einer Kennlinie liegt. Aus Fig. 2 ist der Verlauf dieser Kennlinie tendenziell ersichtlich. Bei einer Fahrzeuggeschwindigkeit v_fzg von Null oder nahe Null werden diese Bereiche bei einem Fahrpedalwunsch von ca. 20 % voneinander getrennt. Bei einer Fahrzeuggeschwindigkeit von v_fzg > ca. 50 km/h wird stets das Signal Wandlerkupplung Zuschalten gesetzt.

Anstelle eines einfachen Algorithmus kann ein erweiterter Algorithmus eingesetzt werden. In erster Linie ist hierfür ein Regelwerk nach Fuzzy-Beziehungen geeignet, durch das der Schließzeitpunkt in Abhängigkeit mehrerer Parameter bestimmt werden kann. Vorzugsweise eignen sich hier die Größen: Fahrpedalwunsch, Fahrzeuggeschwindigkeit, Übersetzung und Anfahrwunsch.

Der Zeitpunkt zum Öffnen der Wandlerkupplung kann ebenfalls nach einem einfachen Algorithmus bestimmt werden. Hierbei wird die Wandlerkupplung über eine Kennlinie, über die die Fahrzeuggeschwindigkeit und die Fahrzeugverzögerung miteinander in Beziehung gesetzt werden, geöffnet (Z_WKA = f(v_fzg,a)).

Der Zeitpunkt zum Öffnen der Wandlerkupplung kann auch im Rahmen eines erweiterten Algorithmus bestimmt werden. Hierbei wird die Wandlerkupplung in Abhängigkeit eines Anhalte- und Bremswunsches geöffnet. Der Brems- und Anhaltewunsch wird wiederum über Fuzzy-Regelwerke generiert. Eine Anpassung zum Auffinden der geeigneten Öffnungszeitpunkte kann über Fahrversuche erfolgen.

### Bezugszeichen

- 1: Antriebseinheit
- 2: Drehmomentwandler
- 3: Wandlergehäuse
- 4: Pumpenrad
- 5: Turbinenrad
- 6: Leitrad
- 7: Ölpumpe
- 8: Ausgangswelle
- 9: Kolben
- 10: Wandlerkupplung
- 11: Reibbelag
- 12: Hydraulikleitung
- 13: Hydraulikleitung
- 14: Hydrauliksteuerung
- 15: Planetengetriebe
- 16: Ausgangswelle
- 17: stufenlos
verstellbares Getriebe
- 18: Umschlingungsorgan
- 19: Primärzylinder
- 20: Sekundärzylinder
- 21: Hydraulikleitung
- 22: Hydraulikleitung
- 23: Abtriebswelle
- 24: Übersetzungsstufe
- 25: Übersetzungsstufe
- 26: Differential
- 27: Achshalbwelle
- 28: Achshalbwelle
- 29: Räder
- 30: Getriebesteuerung
- 31: Sensoren
- 32: Sensoren
- 33: Sensoren
- 34: Steuerorgan
- 35: Sensoren
- 36: Sensoren
- 37: Sensoren
- 38: Sensoren
- 39: Sensoren
- 40: Sensoren
- 41: Sensoren
- 42: Sensoren

## Patentansprüche

1. Steuersystem für ein stufenlos verstellbares Getriebe (17) eines Kraftfahrzeugs mit einem Drehmomentwandler (2) mit einer Wandlerkupplung (10), insbesondere zur Steuerung der Wandlerkupplung zum Überbrücken des Drehmomentwandlers sowie Mitteln (31 bis 42) zum Erfassen von Eingangssignalen, die von einem Fahrer-Fahrzeugsystem abgeleitet sind und die zu einem Ein- und ein Ausrücksignal nach Maßgabe der detektierten Zustände verarbeitet werden, dadurch **gekennzeichnet**, daß die Steuerung der Wandlerkupplung (10) nach einer Strategie erfolgt, bei der der hydrodynamische Drehmomentwandler (2) als hydrodynamischer Variator in Reihenschaltung mit dem stufenlos verstellbaren Getriebe (17) betrachtet wird und daß ein Ein- oder Ausrücken der Wandlerkupplung (10) ausschließlich eine Funktion der Führung der Motor-Soll-Drehzahl (n_Mot_soll) ist.

2. Steuersystem nach Anspruch 1, dadurch **gekennzeichnet**, daß bei der Steuerung der Wandlerkupplung (10) mittels Führung der Motor-Soll-Drehzahl (n_Mot_soll) zwischen zwei Bereichen 1 und 2 unterschieden wird, wobei der Bereich 1 außerhalb des Variogrammes liegt und durch die applizierbare Kennlinie der größten Übersetzung des Variators (iv_max), durch die applizierbare Kennlinie der kleinsten Übersetzung des Variators (iv_min), durch die Kennlinie der mechanisch größten Übersetzung des Variators (LOW) eingegrenzt ist, und wobei der Bereich 2 durch die Kennlinie der mechanisch größten Übersetzung des Variators (LOW) und durch die Kennlinie der mechanisch kleinsten Übersetzung des Variators (OD) definiert wird.

3. Steuersystem nach Anspruch 2, dadurch **gekennzeichnet**, daß die Steuerung der Wandlerkupplung (10) mittels Führung der Motor-Soll-Drehzahl (n_Mot_soll) derart ausbildet ist, daß hinsichtlich der Fälle: Fahren in der Ebene oder Fahren bergauf bzw. bergab unterschieden wird.

4. Steuersystem nach den Ansprüchen 1 und 3, dadurch **gekennzeichnet**, daß Führung der Motordrehzahl derart ausbildet ist, daß die Führungsgröße im Bereich 1 die Motor-Soll-Drehzahl (n_Mot_soll) ist, und daß die Führungsgröße im Bereich 2 die Motor-Soll-Drehzahl (n_Mot_soll) entsprechend der Soll-Drehzahl der Primärscheibe (n_S1_soll) ist, wobei die Soll-Drehzahl der Primärscheibe (n_S1_soll) aus dem Produkt der Soll-Übersetzung (iv_soll) und der Drehzahl der Sekundärscheibe (n_S2) generiert wird.

5. Steuersystem nach den Ansprüchen 1 und 2, dadurch **gekennzeichnet**, daß Führung der Motordrehzahl derart ausbildet ist, daß die Vorgabe einer Motor-Soll-Drehzahl (n_Mot_soll) bei einer Drosselklappenstellung > 1,5 %, also ungleich Null, im Bereich 1 wie folgt generiert wird:
- die applizierten Kennlinien der kleinsten und größten Variatorübersetzung (iv_min, iv_max) werden über die Drehzahl der Sekundärscheibe (n_S2) auf Minimal-Motordrehzahlen (n_Mot_min) bzw. Maximal-Motordrehzahlen (n_Mot_max) umgerechnet und als Kennlinien in der elektronischen Getriebesteuerung (EGS) abgelegt;
- im aktuellen Fahrbereich wird ein Wert für die Motor-Soll-Drehzahl (n_Mot_soll) generiert, der zur Führung der Motordrehzahl dient.

6. Steuersystem nach den Ansprüchen 1 und 2, dadurch **gekennzeichnet**, daß Führung der Motordrehzahl derart ausbildet ist, daß die Vorgabe einer Motor-Soll-Drehzahl (n_Mot_soll) im Bereich 2 wie folgt generiert wird:
- die Vorgabe der Übersetzung iv_soll wird über die Drehzahl der Primärscheibe n_S2 direkt in eine Soll-Motordrehzahl n_Mot_soll umgerechnet und als Führungsgröße verwendet.

7. Steuersystem nach Anspruch 3, dadurch **gekennzeichnet**, daß die Steuerung der Wandlerkupplung (10) mittels Führung der Motor-Soll-Drehzahl (n_Mot_soll) derart ausbildet ist, daß bei Fahrten bergab die Wandlerkupplung (10) geschlossen wird, wenn der Wert der Motor-Soll-Drehzahl (n_Mot_soll), gebildet aus dem Produkt der aktuellen Übersetzung (iv) und der Drehzahl der Sekundärscheibe (n_S2), größer oder gleich der Leerlaufdrehzahl des Motors, also dem Synchronpunkt, ist.

8. Steuersystem nach Anspruch 1, dadurch **gekennzeichnet**, daß die Steuerung der Wandlerkupplung (10) mittels Führung der Motor-Soll-Drehzahl (n_Mot_soll) derart ausbildet ist, daß mit dem Ausrücksignal zum Öffnen der Wandlerkupplung (10) die Übersetzung (iv) des stufenlos verstellbaren Getriebes (17) als Stellgröße benutzt wird, um den Motor auf dem aktuellen Betriebspunkt zu halten, wobei die Vorgabe der Soll-Übersetzung (iv_soll) des Variators bzw. der Soll-Drehzahl der Primärscheibe (n_S1_soll) des Variators zur Soll-Vorgabe für die Motordrehzahl (n_Mot_soll) wird.

9. Steuersystem nach Anspruch 1, dadurch **gekennzeichnet**, daß die Steuerung der Wandlerkupplung (10) mittels Führung der Motor-Soll-Drehzahl (n_Mot_soll) derart ausbildet ist, daß für die Bestimmung des Zeitpunktes zum Einrücken der Wandlerkupplung (10) ein Einrücksignal als Funktion des Fahrpedalwunsches (FPW) und der Fahrzeuggeschwindigkeit (v_fzg) generiert wird.

10. Steuersystem nach Anspruch 1, dadurch **gekennzeichnet**, daß die Steuerung der Wandlerkupplung (10) mittels Führung der Motor-Soll-Drehzahl (n_Mot_soll) derart ausbildet ist, daß zur Bestimmung des Zeitpunktes zum Öffnen der Wandlerkupplung (10) ein Ausrücksignal generiert wird, dem eine Kennlinie zugrunde liegt, über die die Fahrzeuggeschwindigkeit (v_fzg) und die Fahrzeugverzögerung miteinander in Beziehung gesetzt sind.

## Claims

1. A control system for an infinitely variable change-speed gear (17) of a motor vehicle with a torque converter (2) with a converter clutch (10), more particularly for controlling the converter clutch for bridging the torque converter, and means (31 to 42) for detecting input signals, which are derived from a driver-vehicle system and are processed to form an engage and disengage signal as a function of the detected states, characterised in that the control of the converter clutch (10) is effected according to a strategy in which the hydrodynamic torque converter (2) is regarded as a hydrodynamic variable drive in series connection with the infinitely variable change-speed gear (17), and an engagement or disengagement of the converter clutch (10) is exclusively a function of the control of the nominal engine rotational speed (n_Mot_soll).

2. A control system according to claim 1, characterised in that, in the control of the converter clutch (10) by means of control of the nominal engine rotational speed (n_Mot_soll), a distinction is made between two ranges 1 and 2, range 1 lying outside the variogram and being defined by the applicable characteristic curve of the maximum transmission of the variable drive (iv_max), by the applicable characteristic curve of the minimum transmission of the variable drive (iv_min), by the characteristic curve of the maximum mechanical transmission of the variable drive (LOW), and range 2 being defined by the characteristic curve of the maximum mechanical transmission of the variable drive (LOW) and by the characteristic curve of the minimum mechanical transmission of the variable drive (OD).

3. A control system according to claim 2, characterised in that the control of the converter clutch (10) by means of control of the nominal engine rotational speed (n_Mot_soll) is designed in such a manner that a distinction is made between the cases: travel on flat ground and travel uphill or downhill.

4. A control system according to claims 1 and 3, characterised in that control of the engine rotational speed is designed in such a manner that the command variable in range 1 is the nominal engine rotational speed (n_Mot_soll), and the command variable in range 2 is the nominal engine rotational speed (n_Mot_soll) as a function of the nominal rotational speed of the primary disk (n_S1_soll), the nominal rotational speed of the primary disk (n_S1_soll) being generated from the product of the nominal transmission (iv_soll) and the rotational speed of the secondary disk (n_S2).

5. A control system according to claims 1 and 2, characterised in that control of the engine rotational speed is designed in such a manner that the presetting of a nominal engine rotational speed (n_Mot_soll) with a throttle valve position > 1.5%, i.e. unequal to zero, in range 1 is generated as follows:
- the applied characteristic curves of the minimum and maximum variable drive transmission (iv_min, iv_max) are converted via the rotational speed of the secondary disk (n_S2) to minimum engine rotational speeds (n_Mot_min) and maximum engine rotational speeds (n_Mot_max) and stored as characteristic curves in the electronic gear control (EGS);
- in the actual drive range a value is generated for the nominal engine rotational speed (n_Mot_soll) which is used for the control of the engine rotational speed.

6. A control system according to claims 1 and 2, characterised in that control of the engine rotational speed is designed in such a manner that the presetting of a nominal engine rotational speed (n_Mot_soll) in range 2 is generated as follows:
- the presetting of the transmission iv_soll is converted via the rotational speed of the primary disk n_S2 directly into a nominal engine rotational speed (n_Mot_soll) and used as a command variable.

7. A control system according to claim 3, characterised in that the control of the converter clutch (10) by means of control of the nominal engine rotational speed (n_Mot_soll) is designed in such a manner that, when travelling downhill, the converter clutch (10) is closed if the value of the nominal engine rotational speed (n_Mot_soll), formed by the product of the actual transmission (iv) and the rotational speed of the secondary disk (n_S2), is greater than or equal to the idling rotational speed of the engine, i.e. the synchronous product.

8. A control system according to claim 1, characterised in that the control of the converter clutch (10) by means of control of the nominal engine rotational speed (n_Mot_soll) is designed in such a manner that, with the disengage signal for opening the converter clutch (10), the transmission (iv) of the infinitely variable change-speed gear (17) is used as an adjustment value, in order to keep the engine at the actual operating point, the presetting of the nominal transmission (iv_soll) of the variable drive or the nominal engine rotational speed of the primary disk (n_S1_soll) of the variable drive becoming the nominal preset value for the engine rotational speed (n_Mot_soll).

9. A control system according to claim 1, characterised in that the control of the converter clutch (10) by means of control of the nominal engine rotational speed (n_Mot_soll) is designed in such a manner that, for determining the point in time for the engagement of the converter clutch (10), an engage signal is generated as a function of the accelerator pedal demand (FPW) and the vehicle velocity (v_fzg).

10. A control system according to claim 1, characterised in that the control of the converter clutch (10) by means of control of the nominal engine rotational speed (n_Mot_soll) is designed in such a manner that, for determining the point in time for the opening of the converter clutch (10), a disengage signal is generated, which is based on a characteristic curve, by means of which the vehicle velocity (v_fzg) and the vehicle deceleration are set in relation to one another.

## Revendications

1. Système de commande pour une transmission réglable en continu (17) de véhicule automobile comprenant un convertisseur de couple (2) équipé d'un embrayage de convertisseur (10), en particulier pour la commande de l'embrayage du convertisseur pour court-circuiter le convertisseur de couple, ainsi que de moyens (31 à 42) destinés à capter des signaux d'entrée qui sont dérivés d'un système conducteur-véhicule et qui sont traités pour constituer un signal d'embrayage et un signal de débrayage en fonction des états détectés, **caractérisé** en ce que la commande de l'embrayage du convertisseur (10) s'effectue selon une stratégie dans laquelle le convertisseur de couple hydrodynamique (2) est considéré comme un variateur hydrodynamique en série avec la transmission réglable en continu (17) et en ce que l'embrayage ou le débrayage de l'embrayage du convertisseur (10) est exclusivement une fonction du guidage de la vitesse de rotation de consigne du moteur (n_Mot_soll).

2. Système de commande selon la revendication 1, **caractérisé** en ce que, dans la commande de l'embrayage du convertisseur (10) par guidage de la vitesse de rotation de consigne du moteur (n_Mot_soll), on fait la distinction entre deux zones 1 et 2, la zone 1 se trouvant en dehors du variogramme et étant limitée par la caractéristique applicable du rapport maximum du variateur (iv_max), par la caractéristique applicable du rapport mécaniquement minimum du variateur (iv_min), par la caractéristique du rapport mécaniquement maximum du variateur (LOW) et la zone 2 étant définie par la caractéristique du rapport mécaniquement maximum du variateur (LOW) et par la caractéristique du rapport mécaniquement minimum du variateur (OD).

3. Système de commande selon la revendication 2, **caractérisé** en ce que la commande de l'embrayage du convertisseur (10) par guidage de la vitesse de rotation de consigne moteur (n_Mot_soll) est développée de manière à faire la distinction entre les cas ; conduite en plaine ou conduite en montée ou en descente.

4. Système de commande selon les revendications 1 et 3, **caractérisé** en ce que le guidage de la vitesse de rotation du moteur est configuré de manière que la variable de guidage dans la zone 1 soit la vitesse de rotation de consigne du moteur (n_Mot_soll) et que la variable de guidage dans la zone 2 soit la vitesse de rotation de consigne du moteur (n_Mot_soll) correspondant à la vitesse de rotation de consigne du disque primaire (n_S1_soll), la vitesse de rotation de consigne du disque primaire (n_S1_soll) étant générée à partir du produit du rapport de consigne (iv_soll) et de la vitesse de rotation du disque secondaire (n_S2).

5. Système de commande selon les revendications 1 et 2, **caractérisé** en ce que le guidage de la vitesse de rotation du moteur est configuré de manière que la prédétermination d'une vitesse de rotation de consigne du moteur (n_Mot_soll), à une position du volet des gaz > 1,5 %, c'est-à-dire différente de zéro, dans la zone 1 soit générée comme suit :
- les caractéristiques appliquées du rapport minimum et du rapport maximum du variateur (iv_min, iv_max) sont transformées par l'intermédiaire de la vitesse de rotation du disque secondaire (n_s2) en vitesses de rotation minimales du moteur (n_Mot_min) ou en vitesses de rotation maximales du moteur (n_Mot_max) et enregistrées dans la commande électronique de la transmission (EGS) en tant que caractéristiques ;
- dans la zone de conduite actuelle, une valeur est générée pour la vitesse de rotation de consigne du moteur (n_Mot_soll), et sert pour le guidage de la vitesse de rotation du moteur.

6. Système de commande selon les revendications 1 et 2, **caractérisé** en ce que le guidage de la vitesse de rotation du moteur est configuré de manière que la prédétermination d'une vitesse de rotation de consigne du moteur (n_Mot_soll) dans la zone 2 est générée comme suit :
- la prédétermination du rapport (iv_soll) est transformée directement, par l'intermédiaire de la vitesse de rotation du disque primaire (n_S2) en une vitesse de rotation de consigne du moteur (n_Mot_soll) et utilisée comme variable de guidage.

7. Système de commande selon la revendication 3, **caractérisé** en ce que la commande de l'embrayage du convertisseur (10) par guidage de la vitesse de rotation de consigne du moteur (n_Mot_soll) est configurée de manière que, sur les trajets en descente, l'embrayage du convertisseur (10) soit embrayé lorsque la valeur de la vitesse de rotation de consigne du moteur (n_Mot_soll), formée à partir du produit du rapport actuel (iv), et de la vitesse de rotation du disque secondaire (n_S2), est supérieure ou égale à la vitesse de rotation du ralenti du moteur, c'est-à-dire au point de synchronisation.

8. Système de commande selon la revendication 1, **caractérisé** en ce que la commande de l'embrayage du convertisseur (10) par guidage de la vitesse de rotation de consigne du moteur (n_Mot_soll) est configurée de manière qu'en réponse au signal de débrayage pour le débrayage de l'embrayage du convertisseur (10), le rapport (iv) de la transmission réglable en continu (17) est utilisé comme variable réglante, pour maintenir le moteur au point de travail actuel, la prédétermination du rapport de consigne (iv_soll) du variateur ou de la vitesse de rotation de consigne du disque primaire (n_S1_soll) du variateur devenant alors la prédétermination de consigne pour la vitesse de rotation de consigne du moteur (n_Mot_soll).

9. Système de commande selon la revendication 1, **caractérisé** en ce que la commande de l'embrayage du convertisseur (10) par guidage de la vitesse de rotation de consigne du moteur (n_Mot_soll) est configurée de manière que, pour la détermination de l'instant de l'embrayage de l'embrayage du convertisseur (10), un signal d'embrayage est engendré en fonction de la demande de la pédale d'accélérateur (FPW) et de la vitesse du véhicule (v_fzg).

10. Système de commande selon la revendication 1, **caractérisé** en ce que la commande de l'embrayage du convertisseur (10) par guidage de la vitesse de rotation de consigne du moteur (n_Mot_soll) est configurée de manière que, pour la détermination de l'instant du débrayage de l'embrayage du convertisseur (10), il se génère un signal de débrayage, à la base duquel se trouve une caractéristique par l'intermédiaire de laquelle la vitesse du véhicule (v_fzg) et la décélération du véhicule sont mises en relation entre elles.
